# EUROPÄISCHE PATENTSCHRIFT

(11) **EP 0 983 478 B1**
(45) Veröffentlichungstag und Bekanntmachung des Hinweises auf die Patenterteilung: **25.07.2001**
(21) Anmeldenummer: 98932089.0
(22) Anmeldetag: 27.05.1998
(51) Int. Cl.: F42B 3/188

(54) **ZÜNDER FÜR EINEN PYROTECHNISCHEN GASGENERATOR UND GASGENERATOR**
DETONATOR FOR A PYROTECHNICAL GAS GENERATOR AND GAS GENERATOR
DETONATEUR POUR UN GENERATEUR DE GAZ PYROTECHNIQUE, ET GENERATEUR DE GAZ PYROTECHNIQUE

(30) Priorität: 28.05.1997 DE 29709390 U
(43) Veröffentlichungstag der Anmeldung: 08.03.2000
(73) Patentinhaber: TRW Occupant Restraint Systems GmbH & Co. KG, 73551 Alfdorf (DE)
(72) Erfinder: WIER, Franz, D-73571 Göggingen (DE)
(74) Vertreter: Kitzhofer, Thomas, Dipl.-Ing.
(86) Internationale Anmeldenummer: EP9803124
(87) Internationale Veröffentlichungsnummer: WO9854536

(56) Entgegenhaltungen:
- GB-A- 2 198 816
- US-A- 4 256 038
- US-A- 5 140 906
- US-A- 5 153 368
- US-A- 5 367 956

## Beschreibung

Die Erfindung betrifft einen Zünder für einen pyrotechnischen Gasgenerator, mit einer darin angeordneten Zündpille, Kontaktleitungen zur Zündpille. und einer Hochfrequenzdrossel zum Verhindern von Fehlauslösungen, wobei die Hochfrequenzdrossel durch wenigstens einen wenigstens eine Kontaktleitung umgebenden ferromagnetischen Körper gebildet ist.

Zünder für pyrotechnische Gasgeneratoren von Fahrzeuginsassen-Rückhaltesystemen sind in ihrer Herstellung relativ teuer. Die Herstellung erfolgt in zahlreichen Einzelschritten und bislang aufgrund der Komplexität der einzelnen Bauelemente üblicherweise auch bei verschiedenen Herstellern, die das Know-how für die Fertigung der einzelnen Elemente innehaben. Da jedoch die Einzelteile aneinander befestigt werden und aufeinander aufbauen, müssen die Teile bislang von einem Hersteller zu einem weiterverarbeitenden Hersteller transportiert werden, was aufwendig ist.

Die gattungsgemäße GB 2 198 816 A beschreibt den Aufbau eines Zünders mit einem Hochfrequenzfilters für Gasgeneratoren, bei dem Röhrchen aus Ferritmaterial und Röhrchen aus dielektrischer Keramik über die Kontaktdrähte und übereinander geschoben werden. Obwohl so das Löten der Ferrithüllen vermieden wird. ist dieser Aufbau immer noch sehr aufwendig.

Zur Vereinfachung der Herstellung von gasdichten Hochfrequenzfiltern schlägt die US 5 367 956 vor, die Zuleitungsdrähte mit einer elektromagnetisch absorbierenden gesinterten Glaskeramik zu umgeben. Allerdings muß die gesamte Anordnung von Gehäuse, Drähten und Keramikmasse auf Temperaturen von 600°C erhitzt werden, was die Zahl der Fertigungsschritte bei der Verwendung dieses Verfahrens für Zünder von pyrotechnischem Material wieder erhöhen würde.

Die Erfindung schafft einen Zünder, der wesentlich einfacher als bislang bekannte aufgebaut ist und bei dem weniger Fertigungsschritte erforderlich sind als bei bislang bekannten, so daß der Gesamtaufwand der Fertigung geringer ist. Dies wird bei einem Zünder der eingangs genannten Art dadurch erreicht, daß die Kontaktleitungen als wenigstens eine gestanzte Platine ausgebildet sind, vorzugsweise mit einem elektrisch nichtleitenden Trägermaterial, auf dem ein elektrisch leitender Werkstoff aufgebracht ist, daß die Kontaktleitungen zur Bildung eines Grundkörpers mit einem elektrisch nichtleitenden Material umspritzt oder in einem solchen Material vergossen sind und daß der ferromagnetische Körper und der Grundkörper zu einer Einheit zusammengefügt sind, die als die Hochfrequenzdrossel wirkt.

Bei vielen der bislang üblichen Zündern wird die Hochfrequenzdrossel als komplettes Teil zugekauft und muß relativ aufwendig relativ zu den Kontaktleitungen angeordnet werden. Beim erfindungsgemäßen Zünder hingegen können einzelne Fertigungsschritte wegfallen, da zuerst ein Grundkörper durch Umspritzen oder Vergießen der Kontaktleitungen in elektrisch nichtleitendem Material, vorzugsweise Kunststoff, gebildet wird und keine separate Hochfrequenzdrossel, sondern nur ein ferromagnetischer Körper wie z.B. ein aus der GB 2 198 816 A bekanntes Röhrchen mit dem Grundkörper so zusammengefügt wird, daß die entstehende Einheit als Hochfrequenzdrossel wirkt. Dabei übernehmen die sich durch den ferromagnetischen Körper erstreckenden Kontaktleitungen die Wirkung einer Spulenwicklung. Jede sich durch den oder die ferromagnetischen Körper hindurcherstreckende Kontaktleitung wirkt dabei etwa als halbe Spulenwicklung. Dadurch muß der ferromagnetische Körper nicht mehr ganz, wie bislang üblich, umwickelt werden, und die Montage der einzelnen Teile wird vereinfacht. Die umspritzten oder eingegossenen Kontaktleitungen haben eine Doppelfunktion inne.

Bei den Kontaktleitungen kann die Herstellung weiter vereinfacht werden, indem diese vollständig als wenigstens eine Platine ausgebildet sind. Die Platine ist aus elektrisch nichtleitendem Material, welches als Trägermaterial bezeichnet wird. Auf das Trägermaterial wird dann durch bekannte Verfahren wie zum Beispiel Walzen oder Drucken der elektrisch leitende Werkstoff aufgebracht.

Die Erfindung ist nicht nur auf einen Zünder beschränkt, sondern betrifft auch einen Gasgenerator mit darin integriertem, erfindungsgemäßen Zünder, wobei die Zündpille von einem Treibsatz umgeben ist. Der erfindungsgemäße Zünder läßt auch eine leichte kostengünstige Herstellung einer Einheit aus Gasgenerator und Zünder zu.

Vorteilhafte Ausgestaltungen der Erfindung bilden die Gegenstände der Unteransprüche.

Das Zusammenfügen des Grundkörpers und des ferromagnetischen Körpers zu einer Einheit erfolgt vorzugsweise durch eine Klebeverbindung, eine formschlüssige oder eine kraftschlüssige Verbindung.

Der Grundkörper weist vorzugsweise eine der Geometrie des ferromagnetischen Körpers angepaßte Ausnehmung auf, in die der Körper eingeschoben und arretiert werden kann. Die Arretierung kann beispielsweise durch eine am Grundkörper angeformte Rast- oder KlippVerbindung erfolgen, die den ferromagnetischen Körper in seiner montierten Stellung hält. Eine Rast- oder Klippverbindung weist ferner den Vorteil auf, daß der Körper unter Vorspannung in seiner Lage gehalten wird, um Klappergeräusche zu vermeiden.

Bei der bevorzugten Ausführungsform wird der ferromagnetische Körper von einem der Zündpille gegenüberliegenden Ende des Grundkörpers aus in den Grundkörper eingeschoben. Der ferromagnetische Körper wird also in axialer Richtung in die vorzugsweise als Hohlraum ausgebildete Ausnehmung im Grundkörper eingeführt.

Der ferromagnetische Körper kann wenigstens eine Kontaktleitung ringförmig umgeben oder es kann auch für jede Kontaktleitung ein eigener ferromagnetischer Körper vorgesehen sein.

Zur Erzielung einer ausreichenden Induktivität entspricht die Längsausdehnung des ferromagnetischen Körpers wenigstens seiner Querausdehnung.

Darüber hinaus kann am Grundkörper eine Leiterplatte befestigt sein, die mit den Kontaktleitungen verbunden ist und über wenigstens eine eigene Kontaktleitung verfügt. Über diese eigene Kontaktleitung kommuniziert die Leiterplatte mit einer Steuereinheit im Fahrzeug. Dadurch ist es möglich, ständig die Funktionsfähigkeit des Zünders abzufragen. Aufgrund der Nähe der Leiterplatte zur Zündpille können die zur Abfragung der Funktionsfähigkeit erforderlichen Ströme in gewünschter Weise sehr gering gehalten werden.

Auch die Leiterplatte ist vorzugsweise über eine Steck- oder Rastverbindung am Grundkörper befestigt. Leiterplatte und Kontaktleitungen können aus unterschiedlichen Teilen gebildet sein, die erst bei Zusammenfügung von Grundkörper und Leiterplatte miteinander in elektrischen Kontakt kommen. Darüber hinaus können Leiterplatte und Kontaktleitungen auch einstückig ausgebildet sein.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Längsschnittansicht durch eine erste Ausführungsform des erfindungsgemäßen Zünders,
Figur 2 eine Längsschnittansicht durch eine zweite Ausführungsform des erfindungsgemäßen Zünders,
Figur 3 eine Längsschnittansicht nach der Linie III-III in Figur 2,
Figur 4 eine Längsschnittansicht durch eine dritte Ausführungsform des erfindungsgemäßen Zünders,
Figur 5 eine Querschnittsansicht durch eine Ausführungsform des erfindungsgemäßen Zünders,
Figur 6 eine Querschnittsansicht durch eine weitere Ausführungsform des erfindungsgemäßen Zünders, die sich von der in Figur 5 gezeigten durch das Vorhandensein einer Leiterplatte unterscheidet,
Figur 7 eine Querschnittsansicht durch eine Ausführungsform des erfindungsgemäßen Zünders, die sich von der in Figur 6 gezeigten durch eine andere Anordnung der Leiterplatte unterscheidet, wobei die Figuren 5 bis 7 den Zünder jeweils in einer an einem Gasgenerator befestigten Lage zeigen,
Figur 8 eine Längsschnittsansicht durch eine erste Ausführungsform des mit dem erfindungsgemäßen Zünder versehenen erfindungsgemäßen Gasgenerators,
Figur 9 eine Längsschnittsansicht durch den erfindungsgemäßen Gasgenerator nach der Linie IX-IX in Figur 8,
Figur 10 eine Längsschnittansicht durch zweite Ausführungsform des mit dem erfindungsgemäßen Zünder versehenen erfindungsgemäßen Gasgenerator in Längsschnittansicht,
Figur 11 eine Längsschnittansicht durch den erfindungsgemäßen Gasgenerator nach der Linie XI-XI in Figur 10,
Figur 12 eine Längsschnittansicht durch den erfindungsgemäBen Gasgenerator gemäß einer dritten Ausführungsform,
Figur 13 eine Längsschnittansicht nach der Linie XIII-XIII in Figur 12, und
Figuren 14 und 15 verschiedene Abdichtungsmöglichkeiten des Zünders am rückseitigen Ende.

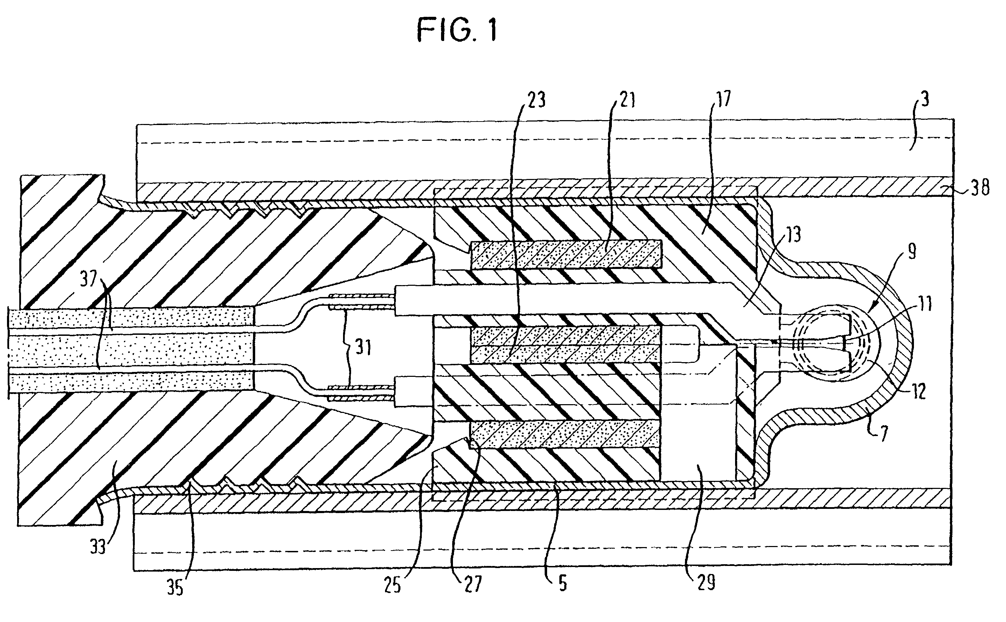

In Figur 1 ist ein Zünder für einen pyrotechnischen Gasgenerator 3 in einem am Gasgenerator 3 montierten Zustand gezeigt. Der Zünder hat ein Gehäuse 5 aus Leichtmetall in Form eines an einer Stirnseite geschlossenen Rohres. An der geschlossenen Stirnseite des Gehäuses 5 weist dieses eine kuppelförmige Ausbuchtung 7 auf. In der Ausbuchtung 7 ist mit Abstand von dem Gehäuse eine Zündpille 9 angeordnet, welche aus einem Glühdraht 11 besteht, der zwei aus gestanzten, langgestreckten Platinen gebildete, voneinander beabstandete Kontaktleitungen miteinander verbindet. Der Glühdraht 11 und die Kontaktleitungen 13 im Bereich ihres der Zündpille 9 zugeordneten Endes sind von pyrotechnischem Zündmaterial 12 umgeben. Die Kontaktleitungen 13 sind durch ein Kunststoffmaterial 17 umspritzt oder in einem Kunststoffkörper 17 vergossen. Dadurch ergibt sich eine feste, nicht lösbare Einheit aus Kontaktleitungen 13 und dem Kunststoff 17, die zusammen einen Grundkörper bilden. Durch das Umspritzen oder Vergießen der Kontaktleitungen 13 sind diese lagefixiert, so daß sie sich nicht einerseits aufeinander zu oder andererseits voneinander weg bewegen können und ein Reißen des Glühdrahtes 13 ausgeschlossen wird.

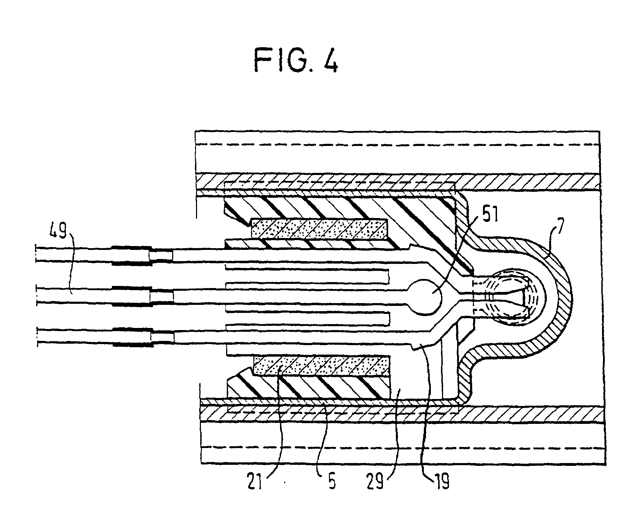

Dadurch, daß die Kontaktleitungen 13 nicht exakt linear verlaufen, sondern auch Abwinkelungen wie im vorderen Bereich nahe der Zündpille 9 (vgl. Fig. 1) oder, wie in Figur 4 gezeigt, nach außen stehende Vorsprünge 19 aufweisen, ergibt sich in axialer Richtung eine lagesichere Einbindung der Kontaktleitungen in den Kunststoff 17, um ein Herausziehen oder Lockern der Kontaktleitungen 13 zu vermeiden.

In dem Grundkörper sind im Bereich der Kunststoffumspritzung 17 zur, der Zündpille 9 abgewandten Stirnseite des Grundkörpers hin offene Hohlräume vorgesehen. Diese Hohlräume erstrecken sich im wesentlichen in axialer Richtung. Sie umgeben mit einem gewissen, von Kunststoffmaterial ausgefüllten Abstand die Kontaktleitungen 13. In diese Ausnehmungen oder Hohlräume werden von der Rückseite aus ringförmige ferromagnetische Körper gesteckt. Bei der in Figur 1 dargestellten Ausführungsform sind zwei ferromagnetische Körper 21 und 23 vorgesehen. Diese sind als langgestreckte Hülsen ausgebildet, die jeweils eine Kontaktleitung 13 umgeben. Zwischen den beiden Kontaktleitungen 13 berühren sich die ferromagnetischen Körper 21 und 23. Die Längsausdehnung der Körper 21, 23 übertrifft deren Querausdehnung deutlich. Die ferromagnetischen Körper werden, wie erwähnt, in den Grundkörper von der Rückseite aus eingeschoben, wobei elastische, am Grundkörper angeformte Rastnasen beim Einführen nach außen ausweichen und nach dem Entlanggleiten der Körper 21, 23 zurückfedern und mit einer Rampenfläche 27 an der Rückseite der Körper 21, 23 vorgespannt anliegen, so daß die Körper 21, 23 lagefixiert sind. Die beschriebene Konstruktion ermöglicht ein einfaches Zusammenbauen der Körpern 21, 23 mit dem Grundkörper zu einer Einheit. Durch die ferromagnetischen Körper 21, 23 und die durch sie hindurch verlaufenden Kontaktleitungen 13 ergibt sich eine Hochfrequenzdrossel. Diese verhindert Fehlauslösungen des Zünders aufgrund von elektromagnetischen Feldern. Die Kontaktleitungen 13 bilden jeweils eine halbe Wicklung in der wenigstens einen, dadurch gebildeten Spule.

Der Kunststoffteil 17 des Grundkörpers weist ferner nahe der Zündpille 9 eine von seitlich außen zugängliche Kammer 29 zur Unterbringung einer nicht gezeigten Leiterplatte auf. Die Kammer 29 ist dabei so gelegen, daß bei eingeschobener Leiterplatte beide Kontaktleitungen 13 von der Leiterplatte berührt werden können. Zur Kammer 29 führt (ebenfalls nicht gezeigt) eine parallel zu den Kontaktleitungen 13 verlaufende und sich innerhalb wenigstens eines ferromagnetischen Körpers 21, 23 erstreckende Kontaktleitung, über die die Leiterplatte an eine Steuereinheit im Fahrzeug angeschlossen werden kann. Die Funktion der Leiterplatte wird später noch näher erläutert.

Die Kontaktleitungen 13 erstrecken sich am rückseitigen Ende bis aus der Kunststoffumspritzung 17 heraus und sind über Verlötungen, Steckkontakte oder Klemmkontakte 31 mit Enden von Kabeln 37 verbunden, die aus dem Gehäuse 5 herausführen und zur schon erwähnten Steuereinheit führen.

Damit das Gehäuse 5 an seiner offenen Rückseite gas- und druckdicht geschlossen wird und beim Zünden kein Gas über die Öffnung herausströmen kann, ist ein Deckel in Form eines elastischen Stopfens 33 in das Gehäuse 3 eingepreßt und anschließend über Verpressen an den Stellen 35 mit dem Gehäuse 5 verbunden. In dem Stopfen 33 sind auch die Kabel 37 eingegossen.

Der dadurch gebildete Zünder zeichnet sich durch eine leichte Herstellbarkeit dank seines einfachen Aufbaus aus. Der Zusammenbau kann ausschließlich an einer Produktionsstätte erfolgen, denn das einzig aufwendige Verfahren stellt das Herstellen der Zündpille 9 dar, sämtliche anderen Verfahrensschritte wie das Umspritzen der Platine und Herstellen der Hochfrequenzdrossel sind relativ einfach beherrschbar.

Das Gehäuse 5 wird ebenso wie der Gasgenerator 3 von einem Klemmring 38 umgeben, der der Befestigung der beiden Teile aneinander dient.

Das Montieren des Grundgehäuses mit den darin eingeschobenen Körpern 21, 23 in das als Tiefzieh- oder Fließpreßteil ausgebildete Gehäuse 5 erfolgt durch Einschieben vom offenen Ende her, wobei eine Preßpassung zwischen der Außenseite der Kunststoffumspritzung 17 und der Innenseite des Gehäuses 5 vorgesehen ist. Ein Kontakt zwischen den Kontaktleitungen 13, dem Gehäuse 5 und den Körpern 21, 23 ist durch die Kunststoffumspritzung 17 ausgeschlossen.

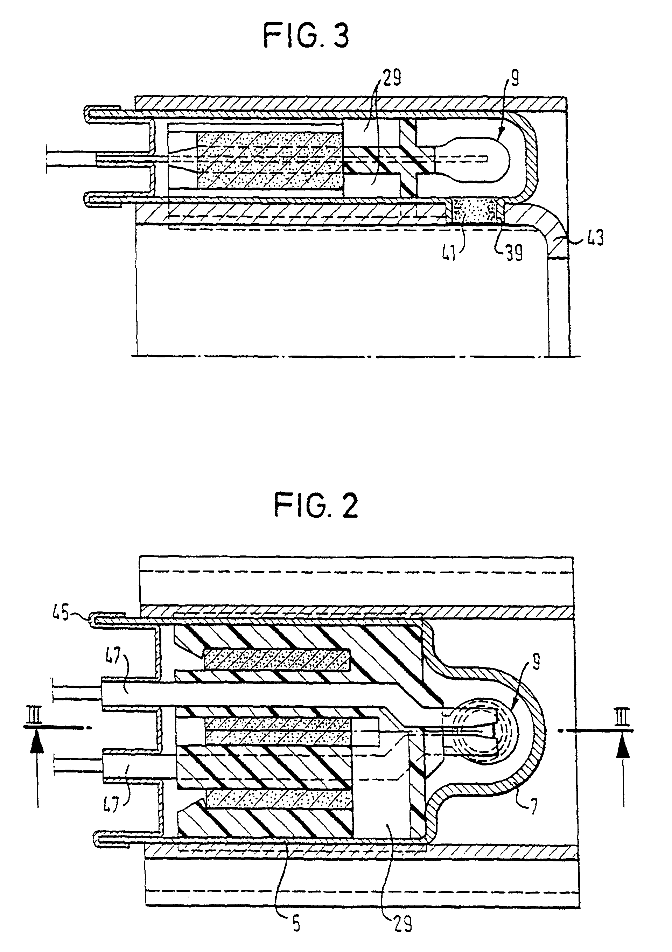

Die in den Figuren 2 und 3 dargestellte Ausführungsform unterscheidet sich von der in Figur 1 gezeigten in einigen Details, so daß nur auf diese Details eingegangen werden muß.

Das Gehäuse 5 weist im Bereich der Zündpille 9 einen seitlichen, hohlen Fortsatz, der mit dem Inneren des Gehäuses in Verbindung ist, auf. Im Inneren des Fortsatzes 39 ist eine Verstärkerladung 41 angeordnet. Der Fortsatz 39 dient zur Lagefixierung des Zünders, indem er sich in eine Öffnung in der Gasgeneratorwandung 43 erstreckt. Zum Zünden wird die im Bereich des Fortsatzes 39 dünn ausgebildete Wandung durchbrochen. Durch die entstehende Öffnung bei Abbrand der Verstärkerladung 41 hindurch wird das Treibmaterial (nicht gezeigt) gezündet.

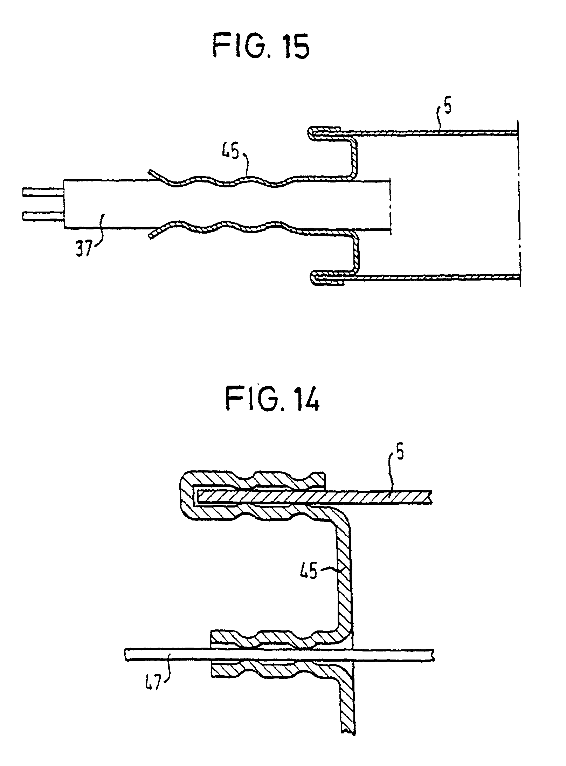

Anstatt des in Figur 1 gezeigten Stopfens 33 wird am rückseitigen Ende des Gehäuses 5 ein Deckel aus leicht verformbarem Metall gas- und druckdicht befestigt. Der Deckel 45 ist so ausgebildet, daß er mit wenig Spiel über die aus der Kunststoffumspritzung 17 herausragenden Kontaktstifte 47 geschoben werden kann. Anschließend werden die Ränder des Deckels 45 im Bereich des Gehäuses 5 und der Kontaktstifte 47 mit denselben verpreßt, ähnlich dem Verschließen einer Sprühdose. Das aus dem Deckel 45 herausragende Ende der Kontaktstifte kann als Steckkontakt zum Anschluß an die nicht gezeigten Kabel dienen. Der Deckel 45 kann, wie in den Figuren 14 und 15 gezeigt, entweder an den Kontaktstiften 47 selbst angreifen oder auch an einer Ummantelung der Kontaktstifte oder des Kabels 37. Ferner können Kontaktstifte 47 und Deckel 45 einzeln für sich oder gemeinsam in eine Dichtungsmasse getaucht werden. Auch eine gummierte Oberfläche von Deckel oder ein Einlegeteil dient gleichermaßen der Abdichtung. Ferner ist die Ausführung des Zünders mit einem Kabelschuh möglich. Bevorzugte Möglichkeiten zur gas- und druckdichten Befestigung des Deckels 45 am Gehäuse 5 sind Bördeln und Ultraschallschweißen.

Die in Figur 4 gezeigte Ausführungsform unterscheidet sich von der zuvor gezeigten dadurch, daß erstmals eine zur Kammer 29 führende Kontaktlastung 49 explizit gezeigt ist. Diese Leitung weist an ihrem Ende eine Kontaktplatte 51 auf, die beim Einführen der nicht gezeigten Leiterplatte in die Kammer 29 mit dieser in Kontakt gerät.

Bei der in Figur 4 gezeigten Ausführungsform ist nur ein ferromagnetischer Körper 21 vorgesehen, der jedoch sämtliche Kontaktleitungen 13, 49 umgibt.

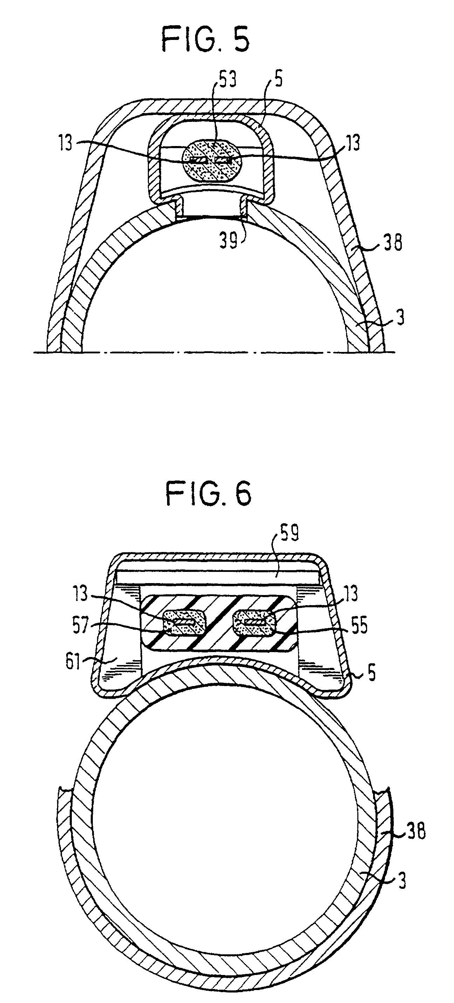

Verschiedene Ausbildungen einer oder mehrerer ferromagnetischer Körper sind in den Figuren 5 bis 7 gezeigt. In Figur 5 ist ein eine ovale Querschnittsfläche aufweisender ferromagnetischer Körper 53 gezeigt, welcher zwei schlitzförmige Öffnungen hat, durch die sich die Kontaktleitungen 13 hindurch erstrecken. Bei dieser Ausgestaltung baut der Zünder sehr schmal.

Bei der in Figur 6 gezeigten Ausführungsform sind zwei ferromagnetische Körper 55, 57 vorgesehen, welche jeweils eine Kontaktleitung 13 umgeben. Die ferromagnetischen Körper 55, 57 berühren sich im Gegensatz zu der in Figur 1 gezeigten Ausführungsform jedoch nicht zwischen den Kontaktleitungen 13. Eine Leiterplatte 59 erstreckt sich längs des Grundkörpers im Inneren des Gehäuses 5. Die separate Kontaktleitung für die Leiterplatte 59 ist nicht explizit dargestellt. Über am Gehäuse 5 vorstehende Halter 61 wird die Leiterplatte 59 mit dem Grundkörper verbunden.

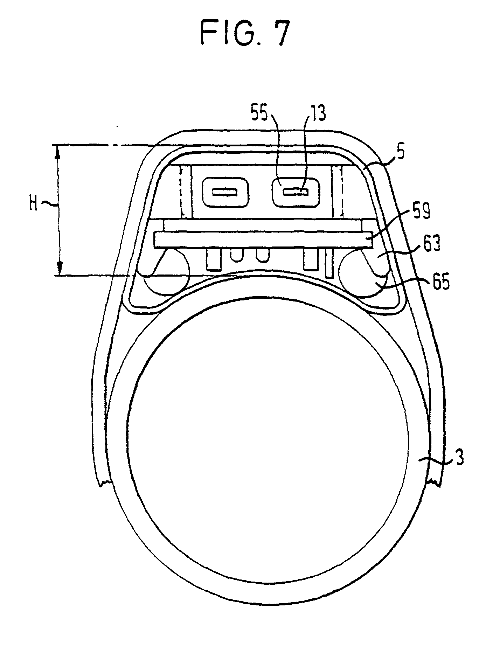

Bei der in Figur 7 dargestellten Ausführungsform ist die Leiterplatte 59 direkt am Grundkörper befestigt, genauer gesagt an der zum Gasgenerator 3 gewandten Innenseite. Mehrere elastische, am Grundkörper angeformte Rastnasen 63 bilden eine Art Klippverbindung, durch die die Leiterplatte 59 an der Grundplatte arretiert ist.

Die Verbindung mit den Kontaktleitungen 13 kann z. B. über eine Streckverbindung oder eine Crimpverbindung erfolgen. Da der größte Abstand zwischen der Leiterplatte 59 und der Außenkontur des Gasgenerators 3 im Bereich der äußeren Längsseiten der Leiterplatte 59 vorliegt, sind die großen Bauelemente, wie z.B. Transistoren 65 in diesem Bereich angeordnet. Damit wird die gesamte Bauhöhe H des Zünders durch große Bauelemente nicht negativ beeinflußt.

Anstatt der flächigen Kontaktleitungen 13 können auch runde Kontaktleitungen vorgesehen sein.

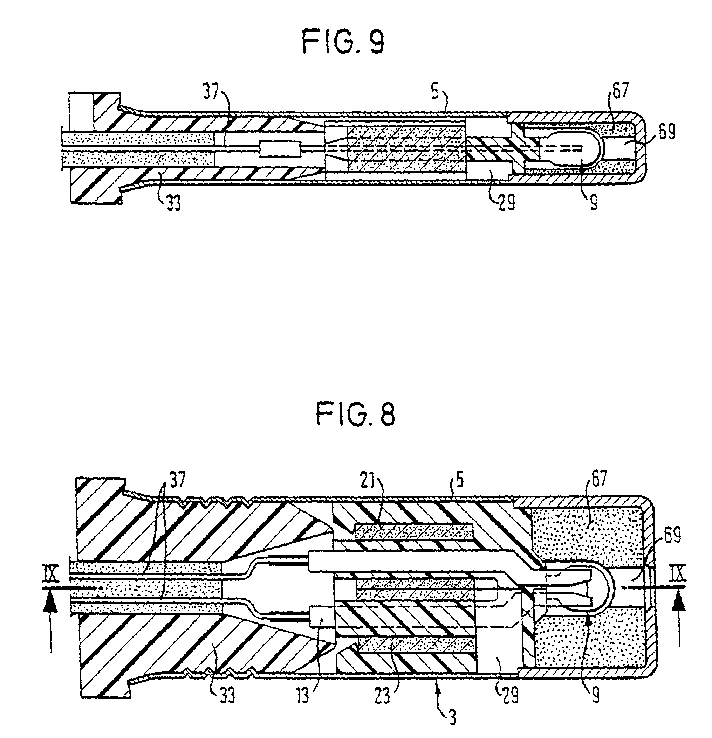

Der Zünder kann auch in einem Gasgenerator integriert sein, ohne daß die zuvor beschriebene Konstruktion deutlich geändert werden müßte. Dies ist in den Figuren 8 bis 13 dargestellt. Das Gehäuse 5 stellt dabei nicht nur das Gehäuse des Zünders, sondern auch das Gehäuse des Gasgenerators dar. Dieses Gehäuse ist in dem Bereich der Zündpille 9 nicht mehr mit einer kuppelförmigen Ausbuchtung 7 umgeben, da um die Zündpille 9 herum Platz für die Unterbringung von Treibsatz 67 vorgesehen ist. Am stirnseitigen Ende der Zündpille, zwischen dieser und der Stirnwand ist eine Verstärkerladung 69 angeordnet. Das Gehäuse 5 weist im Bereich um die Zündpille herum, also der Brennkammer, eine größere Wandungsdicke auf. Da ansonsten bezüglich Abdichtung und Kontaktherstellung zwischen den Kontaktleitungen und dem Kabel 37 keine Änderungen gegenüber den zuvor beschriebenen Ausführungsformen notwendig sind, kann auf eine detaillierte Beschreibung verzichtet werden. Teile, die bereits zuvor im Zusammenhang mit dem Zünder beschrieben worden sind, tragen dabei die bereits eingeführten, gleichen Bezugszeichen.

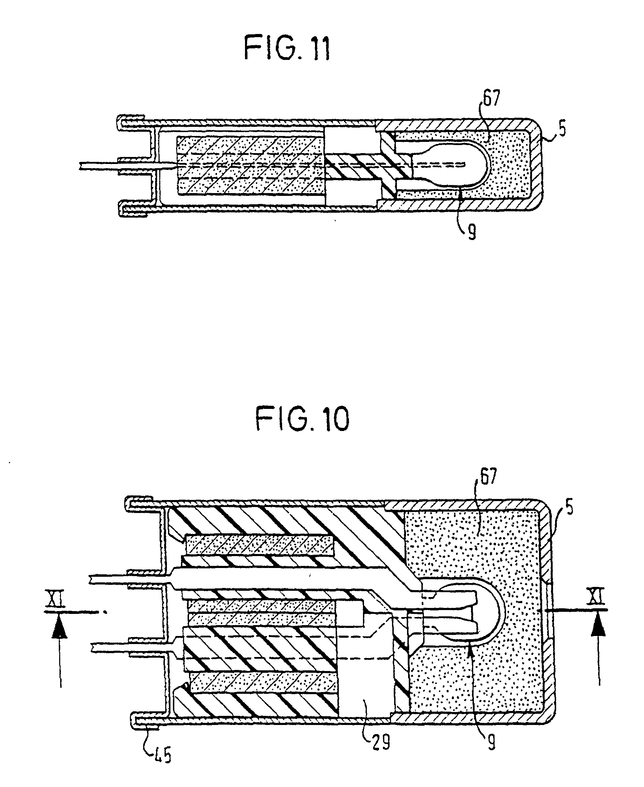

Die in den Figuren 10 und 11 gezeigte Ausführungsform des Gasgenerators unterscheidet sich von der zuvor gezeigten durch das Fehlen einer Verstärkerladung und eines Stopfens 33 zum Abdichten des Gehäuses 5. Anstattdessen ist ein zuvor schon beschriebener Deckel 45 zur Abdichtung vorgesehen.

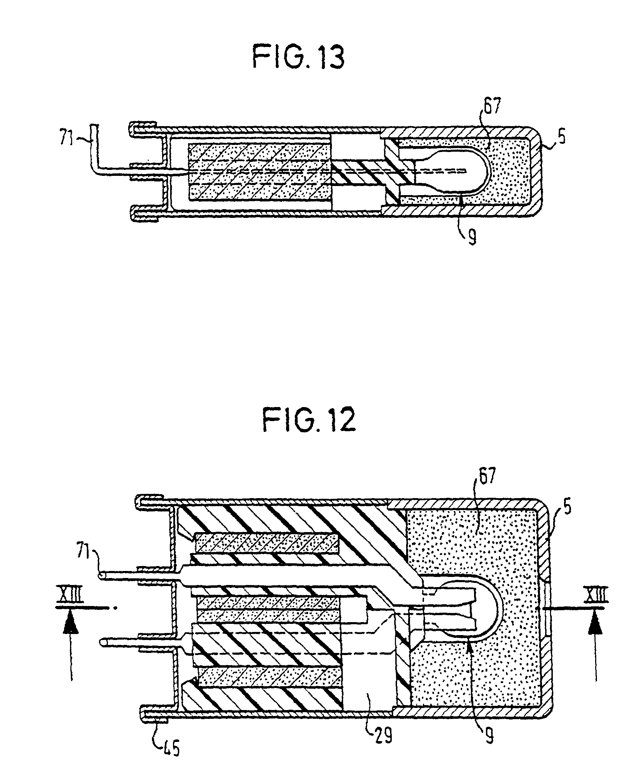

Bei der in den Figuren 12 und 13 gezeigten Ausführungsform ist der Treibsatz 67 in einem, nicht explizit gezeigten, dünnwandigen Kunststoffbehälter eingebracht, der den gesamten Brennraum zwischen Zündpille 9 und Gehäuse 5 ausfüllt. Die sich bei dieser Ausführungsform aus dem Gehäuse 5 erstreckenden Kontakte sind als abgewinkelte Steckkontakte 71 ausgeführt.

Das Gehäuse 5 kann auch mit einem Werkstoff beschichtet sein oder selbst aus einem Werkstoff sein, der eine gewisse Abschirmwirkung hat.

## Patentansprüche

1. Zünder für einen pyrotechnischen Gasgenerator (3), mit einer darin angeordneten Zündpille (9), Kontaktleitungen (13) zur Zündpille und einer Hochfrequenzdrossel zum Verhindern von Fehlauslösungen, wobei die Hochfreqzenzdrossel durch wenigstens einen wenigstens eine Kontaktleitung umgebenden ferromagnetischen Körper (21, 23, 53, 55, 57) gebildet ist, dadurch gekennzeichnet, daß die Kontaktleitungen (13, 15) als wenigstens eine gestanzte Platine ausgebildet sind, daß die Kontaktleitungen (13) zur Bildung eines Grundkörpers mit einem elektrisch nichtleitenden Material (17) umspritzt oder in einem solchen Material vergossen sind und daß wenigstens der ferromagnetische Körper (21, 23, 53, 55, 57) und der Grundkörper zu einer Einheit zusammengefügt sind, die als Hochfrequenzdrossel wirkt.

2. Zünder nach Anspruch 1, dadurch gekennzeichnet, daß die Platine durch ein elektrisch nichtleitendes Trägermaterial, auf dem ein elektrisch leitender Werkstoff aufgebracht ist, gebildet ist.

3. Zünder nach einem der vorsiehenden Ansprüche, dadurch gekennzeichnet, daß der ferromagnetische Körper (21, 23, 53, 55, 57) durch Klebeverbindungen, eine formschlüssige oder eine kraftschlüssige Verbindung am Grundkörper befestigt ist.

4. Zünder nach einem der vorstehenden Ansprüche, dadurch gekennzeichnet, daß der Grundkörper wenigstens eine der Geometrie des ferromagnetischen Körpers (21, 23, 53, 55, 57) angepaßte Ausnehmung aufweist, in die dieser eingeschoben und in der er arretiert ist.

5. Zünder nach Anspruch 4, dadurch gekennzeichnet, daß am Grundkörper eine Rastverbindung (25) angeformt ist, durch die der ferromagnetische Körper (21, 23, 53, 55, 57) in seiner montierten Stellung gehalten wird.

6. Zünder nach einem der vorstehenden Ansprüche, dadurch gekennzeichnet, daß der ferromagnetische Körper (21, 23, 53, 55, 57) von einem der Zündpille (9) gegenüberliegenden Ende des Grundkörpers aus in den Grundkörper eingeschoben ist.

7. Zünder nach einem der vorstehenden Ansprüche, dadurch gekennzeichnet, daß der ferromagnetische Körper (21, 23, 53, 55, 57) wenigstens eine Kontaktleitung (13, 15) ringförmig umgibt.

8. Zünder nach einem der Ansprüche 1 bis 6, dadurch gekennzeichnet, daß für jede Kontaktleitung (13, 15) ein ferromagnetischer Körper (21, 23, 53, 55, 57) vorhanden ist, der die zugeordnete Kontaktleitung (13, 15) umgibt.

9. Zünder nach Anspruch 8, dadurch gekennzeichnet, daß sich die ferromagnetischen Körper (21, 23) zwischen den Kontaktleitungen (13, 15) berühren.

10. Zünder nach einem der vorstehenden Ansprüche, dadurch gekennzeichnet. daß Längsausdehnung des ferromagnetischen Körpers (21, 23, 53, 55, 57) wenigstens seiner Querausdehnung entspricht.

11. Zünder nach einem der vorstehenden Ansprüche, dadurch gekennzeichnet, daß die Kontaktleitungen (13, 15) wenigstens einen seitlichen Vorsprung (19) innerhalb des nichtleitenden Materials (17) aufweisen, das einem axialen Verschieben der Kontaktleitung (13, 15) entgegenwirkt.

12. Zünder nach einem der vorstehenden Ansprüche, dadurch gekennzeichnet, daß am Grundkörper eine Leiterplatte (59) befestigt ist, die mit den Kontaktleitungen (13, 15) verbunden ist und über wenigstens eine eigene Kontaktleitung (49) verfügt, über die sie mit einer Steuereinheit verbunden werden kann.

13. Zünder nach Anspruch 12, dadurch gekennzeichnet, daß sich auch die Kontaktleitung (49) der Leiterplatte (59) durch einen ferromagnetischen Körper im Grundkörper erstreckt.

14. Zünder nach einem der Ansprüche 12 und 13, dadurch gekennzeichnet, daß die Leiterplatte über eine Steck- oder Rastverbindung (63) am Grundkörper befestigt ist.

15. Zünder nach einem der Ansprüche 12 bis 14, dadurch gekennzeichnet, daß die Leiterplatte (59) sich in Längsrichtung des Zünders erstreckt.

16. Zünder nach einem der Ansprüche 12 bis 15, dadurch gekennzeichnet, daß die Leiterplatte (59) außenseitig am Grundkörper arretiert ist.

17. Zünder nach einem der Ansprüche 12 bis 16, dadurch gekennzeichnet, daß die Leiterplatte (59) und die Kontaktleitungen (13, 15) zur Zündpille (9) einstückig ausgebildet sind.

18. Zünder nach einem der vorstehenden Ansprüche, dadurch gekennzeichnet, daß er von einem Gehäuse (5) umgeben ist, in das der Grundkörper samt des ferromagnetischen Körpers (21, 23, 53, 55, 57) bei der Montage eingeschoben werden kann.

19. Zünder nach Anspruch 18, dadurch gekennzeichnet, daß das Gehäuse (5) einen nahe der Zündpille (9) vorgesehenen, seitlich hohlen Fortsatz (39) hat, in der eine Verstärkerladung (41) angeordnet ist.

20. Zünder nach Anspruch 18 oder 19, dadurch gekennzeichnet, daß sich das Gehäuse (5) im Bereich des Fortsatzes (39) bei Zündung öffnet.

21. Zünder nach einem der Ansprüch 18 bis 20, dadurch gekennzeichnet, daß das Gehäuse (5) an dem der Zündpille (9) entgegengesetzten Ende mit einem Deckel (33; 45) druckdicht verschlossen ist.

22. Zünder nach Anspruch 21, dadurch gekennzeichnet, daß der Deckel als in das Gehäuse (5) eingepreßter Stopfen (33) ausgebildet ist.

23. Zünder nach Anspruch 21, dadurch gekennzeichnet, daß der Deckel (45) aus leicht verformbarem Material und an den aus dem Grundkörper herausragenden Leitungen und/oder dem Gehäuse (5) befestigt ist.

24. Zünder nach einem der vorstehenden Ansprüche, dadurch gekennzeichnet, daß das Gehäuse (5) des Zünders mit einem Werkstoff beschichtet ist oder aus einem Werkstoff besteht, durch den das Gehäuseinnere zumindest teilweise gegen elektromagetische Strahlung abgeschirmt wird.

25. Gasgenerator mit darin integriertem Zünder nach einem der vorstehenden Ansprüche, dadurch gekennzeichnet, daß die Zündpille (9) von einem Treibsatz (67) umgeben ist.

26. Gasgenerator nach Anspruch 25, dadurch gekennzeichnet, daß Zünder und Gasgenerator ein gemeinsames Gehäuse (5) aufweisen.

## Claims

1. An igniter for a pyrotechnical inflator (3), comprising a squib (9) arranged therein, contact leads (13) to the squib, and a high-frequency choke for preventing spurious release, the high-frequency choke being formed by at least one ferromagnetic body (21, 23, 53, 55, 57) surrounding at least one contact lead, characterized by said contact leads (13, 15) being configured as at least one printed circuit board, by said contact leads (13), for constituting a base body, being molded in an electrically non-conductive material (17) or sealed in such a material, and by at least said ferromagnetic body (21, 23, 53, 55, 57) and said base body being combined to form a unit serving as the high-frequency choke.

2. The igniter as set forth in claim 1, characterized in that said printed circuit board is formed by an electrically non-conductive substrate material on which an electrically conducting material is applied.

3. The igniter as set forth in either of the preceding claims, characterized in that said ferromagnetic body (21, 23, 53, 55, 57) is secured to said base body by bonding, by means of an interlocking fit or with a force-transmitting connection.

4. The igniter as set forth in any of the preceding claims, characterized in that said base body comprises at least one recess adapted to the geometry of said ferromagnetic body (21, 23, 53, 55, 57) into which the latter is inserted and in which it is arrested.

5. The igniter as set forth in claim 4, characterized in that a latching connection (25) is formed on said base body, said latching connection retaining said ferromagnetic body (21, 23, 53, 55, 57) in its fitted position.

6. The igniter as set forth in any of the preceding claims, characterized in that said ferromagnetic body (21, 23, 53, 55, 57) is inserted into said base body from an end of said base body opposite said squib (9).

7. The igniter as set forth in any of the preceding claims, characterized in that said ferromagnetic body (21, 23, 53, 55, 57) annularly surrounds at least one contact lead (13, 15).

8. The igniter as set forth in any of the claims 1 to 6, characterized in that a ferromagnetic body (21, 23, 53, 55, 57) is provided for each contact lead (13, 15), which surrounds the assigned contact lead (13, 15).

9. The igniter as set forth in claim 8, characterized in that said ferromagnetic bodies (21, 23) are in contact between said contact leads (13, 15).

10. The igniter as set forth in any of the preceding claims, characterized in that the longitudinal extent of said ferromagnetic body (21, 23, 53, 55, 57) corresponds at least to its transverse extent.

11. The igniter as set forth in any of the preceding claims, characterized in that said contact leads (13, 15) comprise at least one lateral protrusion (19) within said non-conductive material (17), said non-conductive material (17) counteracting any axial displacement of said contact lead (13, 15).

12. The igniter as set forth in any of the preceding claims, characterized in that a circuit board (59) is secured to said base body, said circuit board being connected to said contact leads (13, 15) and provided with at least one contact lead (49) of its own via which it can be connected to a control unit.

13. The igniter as set forth in claim 12, characterized in that also said contact lead (49) of said circuit board (59) extends through a ferromagnetic body in said base body.

14. The igniter as set forth in claim 12 or claim 13, characterized in that said circuit board is secured to said base body via a plug-in or latching connection (63).

15. The igniter as set forth in any of the claims 12 to 14, characterized in that said circuit board (59) extends in the longitudinal direction of said igniter.

16. The igniter as set forth in any of the claims 12 to 15, characterized in that said circuit board (59) is arrested at the outer side of said base body.

17. The igniter as set forth in any of the claims 12 to 16, characterized in that said circuit board (59) and said contact leads (13, 15) to said squib (9) are integrally formed.

18. The igniter as set forth in any of the preceding claims, characterized in that said igniter is surrounded by a housing (5) into which said base body including said ferromagnetic body (21, 23, 53, 55, 57) can be inserted for assembly.

19. The igniter as set forth in claim 18, characterized in that said housing (5) has a laterally hollow prolongation (39) provided in the vicinity of said squib (9), a booster charge (41) being arranged in said prolongation (39).

20. The igniter as set forth in claim 18 or 19, characterized in that said housing (5) opens in the region of said prolongation (39) on ignition.

21. The igniter as set forth in any of the claims 18 to 20, characterized in that said housing (5) is closed off pressure-tight by a cover (33; 45) at the end opposite said squib (9).

22. The igniter as set forth in claim 21, characterized in that said cover is configured as a plug (33) pressed into said housing (5).

23. The igniter as set forth in claim 21, characterized in that said cover (45) is of an easily workable material and that it is secured to said leads protruding from said base body and/or to said housing (5).

24. The igniter as set forth in any of the preceding claims, characterized in that said housing (5) of said igniter is coated with a material or consists of a material by means of which the interior of said housing is shielded at least in part from electromagnetic radiation.

25. An inflator with an igniter integrated therein as set forth in any of the preceding claims, characterized in that said squib (9) is surrounded by a propellant charge (67).

26. The inflator as set forth in claim 25, characterized in that said igniter and said inflator feature a common housing (5).

## Revendications

1. Détonateur pour un générateur de gaz (3) pyrotechnique, comportant une amorce (9) agencée à l'intérieur, des conducteurs de contact (13) vers l'amorce et une bobine d'arrêt de haute fréquence pour empêcher des déclenchements par erreur, la bobine d'arrêt de haute fréquence étant formée par au moins un corps ferromagnétique (21, 23, 53, 55, 57) entourant au moins un conducteur de contact, caractérisé en ce que les conducteurs de contact (13, 15) sont conçus comme au moins un disque estampé, en ce que les conducteurs de contact (13) sont couverts par extrusion avec un matériau non conducteur électrique (17) ou scellés dans un tel matériau pour former un corps de base et en ce qu'au moins le corps ferromagnétique (21, 23, 53, 55, 57) et le corps de base sont assemblés en une unité qui agit comme bobine d'arrêt de haute fréquence.

2. Détonateur selon la revendication 1, caractérisé en ce que le disque est formé par un matériau support non conducteur électrique sur lequel est appliqué un matériau conducteur électrique.

3. Détonateur selon l'une des revendications précédentes, caractérisé en ce que le corps ferromagnétique (21, 23, 53, 55, 57) est fixé au corps de base par des assemblages collés, par un assemblage par complémentarité de formes ou par un assemblage en force.

4. Détonateur selon l'une des revendications précédentes, caractérisé en ce que le corps de base comporte au moins un évidement qui est adapté à la géométrie du corps ferromagnétique (21, 23, 53, 55, 57) et dans lequel ce corps est poussé et bloqué.

5. Détonateur selon la revendication 4, caractérisé en ce qu'il est formé sur le corps de base un assemblage à cran (25) par lequel le corps ferromagnétique (21, 23, 53, 55, 57) est maintenu dans sa position montée.

6. Détonateur selon l'une des revendications précédentes, caractérisé en ce que le corps ferromagnétique (21, 23, 53, 55, 57) est poussé dans le corps de base à partir d'une extrémité, opposée à l'amorce (9), du corps de base.

7. Détonateur selon l'une des revendications précédentes, caractérisé en ce que le corps ferromagnétique (21, 23, 53, 55, 57) entoure en anneau au moins un conducteur de contact (13, 15).

8. Détonateur selon l'une des revendications 1 à 6, caractérisé en ce qu'il y a pour chaque conducteur de contact (13, 15) un corps ferromagnétique (21, 23, 53, 55, 57) qui entoure le conducteur de contact (13, 15) associé.

9. Détonateur selon la revendication 8, caractérisé en ce que les corps ferromagnétiques (21, 23) entre les conducteurs de contact (13, 15) se touchent.

10. Détonateur selon l'une des revendications précédentes, caractérisé en ce que l'extension longitudinale du corps ferromagnétique (21, 23, 53, 55, 57) correspond au moins à son extension transversale.

11. Détonateur selon l'une des revendications précédentes, caractérisé en ce que les conducteurs de contact (13, 15) comportent au moins une partie en saillie latérale (19) à l'intérieur du matériau non conducteur (17) qui s'oppose à un déplacement axial du conducteur de contact (13, 15).

12. Détonateur selon l'une des revendications précédentes, caractérisé en ce qu'il est fixé au corps de base une plaque de circuits imprimés (59) qui est reliée aux conducteurs de contact (13, 15) et qui dispose d'au moins un conducteur de contact propre (49) par l'intermédiaire duquel elle peut être reliée à une unité de commande.

13. Détonateur selon la revendication 12, caractérisé en ce que le conducteur de contact (49) de la plaque de circuits imprimés (59) s'étend aussi à travers un corps ferromagnétique dans le corps de base.

14. Détonateur selon l'une des revendications 12 et 13, caractérisé en ce que la plaque de circuits imprimés est fixée au corps de base par l'intermédiaire d'un assemblage par enfichage ou par cran (63).

15. Détonateur selon l'une des revendications 12 à 14, caractérisé en ce que la plaque de circuits imprimés (59) s'étend dans le sens de la longueur du détonateur.

16. Détonateur selon l'une des revendications 12 à 15, caractérisé en ce que la plaque de circuits imprimés (59) est arrêtée sur le corps de base du côté extérieur.

17. Détonateur selon l'une des revendications 12 à 16, caractérisé en ce que la plaque de circuits imprimés (59) et les conducteurs de contact (13, 15) vers l'amorce (9) sont conçus d'un seul tenant.

18. Détonateur selon l'une des revendications précédentes, caractérisé en ce qu'il est entouré par un boîtier (5) dans lequel le corps de base avec le corps ferromagnétique (21, 23, 53, 55, 57) peut être poussé lors du montage.

19. Détonateur selon la revendication 18, caractérisé en ce que le boîtier (5) a un prolongement (39) latéralement creux qui est prévu près de l'amorce (9) et dans lequel une charge amplificatrice (41) est prévue.

20. Détonateur selon la revendication 18 ou 19, caractérisé en ce que le boîtier (5) s'ouvre dans la zone du prolongement (39) lors de l'allumage.

21. Détonateur selon l'une des revendications 18 à 20, caractérisé en ce que le boîtier (5) est fermé de façon étanche à la pression avec un couvercle (33 ; 45) au niveau de l'extrémité opposée à l'amorce (9).

22. Détonateur selon la revendication 21, caractérisé en ce que le couvercle est conçu comme un bouchon (33) enfoncé dans le boîtier (5).

23. Détonateur selon la revendication 21, caractérisé en ce que le couvercle (45) est en un matériau facilement déformable et est fixé sur les conducteurs sortant du corps de base et/ou sur le boîtier (5).

24. Détonateur selon l'une des revendications précédentes, caractérisé en ce que le boîtier (5) du détonateur est recouvert d'un matériau ou est en un matériau par lequel l'intérieur du boîtier est protégé au moins en partie contre un rayonnement électromagnétique.

25. Générateur de gaz comportant un détonateur selon l'une des revendications précédentes qui est intégré à l'intérieur, caractérisé en ce que l'amorce (9) est entourée par un bloc de propergol (67).

26. Générateur de gaz selon la revendication 25, caractérisé en ce que le détonateur et le générateur de gaz comportent un boîtier commun (5).
